# EUROPEAN PATENT APPLICATION

(11) **EP 3 121 638 A1**
(43) Date of publication of application: **25.01.2017**
(21) Application number: 15380032.1
(22) Date of filing: 22.07.2015
(51) Int. Cl.: G02B 27/01, G06F 11/16, G06F 3/14, G06F 11/07

(54) **SAFE HEAD-UP DISPLAY FOR GUIDED VEHICLE DRIVER CABIN AND CORRESPONDING METHOD**

(71) Applicant: Siemens Rail Automation S.A.U., ES-28760 Tres Cantos (Madrid) (ES)
(72) Inventor: Barroso, David Garrido, E-28805 Alcala de Henares (ES)
(74) Representative: Maier, Daniel Oliver

(57) **Abstract**

Safe head-up display for guided vehicle driver cabin and corresponding method.

The present invention concerns a safe head-up display system (2) configured for a vehicle, as well as a method for ensuring the safety of information displayed by means of a head-up display (221), the said HUD system (2) comprising:
- a visualization system (22) comprising a HUD (221);
- a HUD computer (21) configured for being connected to the HUD (221) and to an on-board control unit (1) of the vehicle for receiving raw information, wherein said raw information is data sent by the on-board control unit (1) to the HUD computer (21) for its display on the HUD (221);

characterized in that the HUD system (2) comprises
- a safety module (23) configured for checking the correctness of the information displayed on the HUD (221) and signaling a difference between the displayed information and the raw information..

## Description

The present invention concerns a safe head-up display system configured for a rail vehicle, as well as a method for ensuring the safety of information displayed by means of a head-up display.

The present invention is in particular directed to the interface between a rail vehicle and a driver, known as Driver Machine Interface (DMI). Such an interface is currently installed on-board the rail vehicle, usually on the front of a driving console located in a cabin of the rail vehicle. The DMI usually comprises a touchscreen display embedded in the driving console, wherein important information might be displayed or checked by the driver. Unfortunately, the position of the DMI in the cabin prevents the driver to continuously concentrate and focus on the track, since the driver has to look down at the driving console for periodically checking relevant information displayed by the DMI.

Additionally, information displayed by the DMI, such as current speed, speed limits, European Train Control System (ETCS) mode, etc., is critical and safety related for the rail vehicle and might encounter failure when displayed by the DMI, for instance the wrong information might be displayed, or critical information is even not displayed. Causes for such failures are for example faulty graphic memory, display malfunction or faults on any component of the chain of components starting from an on-board computer that processes information and the DMI that displays it.

An objective of the present invention is to propose a system and a method that on one hand make critical driving information available to the driver without requiring the driver to look away from the track, and on the other hand ensure that the displayed critical information is not faulty.

For reaching the above-mentioned objective, the present invention proposes a safe head-up display (hereafter HUD) system, and a method for ensuring the safe functioning of the HUD, said HUD system allowing to present data or information to a vehicle driver with the latter continuously keeping his head positioned "up" and looking forward, thus avoiding having the driver looking down at a driving console.

The present invention concerns a HUD system configured for being installed on-board a vehicle (by "vehicle", it has to be understood any transport mean capable of carrying at least one individual, e.g. land vehicles, vehicles capable of atmospheric flight, etc., but preferentially refers to a rail vehicle), said HUD system comprising:
- a visualization system comprising a HUD;
- a HUD computer configured for being connected to the HUD and to an on-board control unit of the vehicle for receiving raw information, wherein the on-board control unit is a device in charge of processing data that have to be displayed on the HUD and said raw information is data sent by the on-board control unit to the HUD computer for its display on the HUD by means of the visualization system;
characterized in that the HUD system comprises
- a safety module configured for checking the correctness of the information displayed on the HUD and signaling a difference between the displayed information and the raw information, wherein said signaling comprises in particular highlighting on the HUD displayed information that differs from raw information and/or acoustically signaling a difference between the displayed information and the raw information. In other words, the safety module is able to compare the displayed information or data against the original source of data that comes from the on-board control unit of the vehicle, i.e. said raw information, and to trigger a warning as soon as a difference between the displayed information and received raw information is detected. By this way, the driver becomes aware of any faulty information displayed on the HUD without having to defocus from his usual viewpoint, e.g. the track on which the rail vehicle is moving.

The on-board control unit of the vehicle is typically a computer machine configured for controlling movement authority of the vehicle, its speed, speed limitations, etc. The HUD computer is connectable to the on-board control unit for displaying at least a part of the data processed by the on-board control unit.

The present invention also concerns a method for checking information displayed on a HUD designed for a vehicle, preferentially a rail vehicle, and signaling a displaying failure occurring on said HUD, the method comprising:
- Receiving raw information by means of a HUD computer, wherein said raw information is sent by an on-board control unit of the vehicle to the HUD computer;
- Processing said raw information by means of the HUD computer for creating a graphical representation of said raw information and displaying it on the HUD connected to the HUD computer;

Characterized in that the method according to the invention comprises:
- checking the correctness of the information displayed on the HUD by detecting a difference between the displayed information and the raw information by means of a safety module;
- signaling, preferentially on said HUD, any difference between the displayed information and the raw information, so that the driver becomes aware of a failure without having to defocus from his usual viewpoint. Alternatively or additionally, an acoustic signal might be used for signaling said failure.

According to a preferred embodiment, the safety module comprises a camera configured for capturing an image of the information displayed on the HUD, said camera being connected to the HUD computer. Said camera advantageously allows the creation of a feedback loop for checking information displayed by means of the HUD. Indeed, the HUD computer according to the invention is in particular configured for reversing into interpreted discrete data graphical data forming the captured image, and for analyzing said interpreted discrete data in order to detect a difference between the displayed information and the raw information received by the on-board control unit. In particular, the HUD computer is configured for comparing the raw information, i.e. the original source of data delivered by the on-board control unit, with the interpreted discrete data for detecting said difference. Finally, the HUD computer is capable of signaling said difference, for example by displaying a warning that may indicate on the HUD which information is faulty, and/or by emitting an audible signal.

According to another preferred embodiment, the safety module comprises an additional HUD computer so that the HUD computer and the additional HUD computer are redundant computers that will be called hereafter respectively the first HUD computer (i.e. the HUD computer previously introduced) and the second HUD computer (i.e. the additional HUD computer presently introduced). According to this other preferred embodiment, the second HUD computer is configured for being connected to the on-board control unit of the vehicle for receiving said raw information, so that both first and second HUD computer receive and process the same raw information. The first and second HUD computers are connected to the HUD for displaying the received raw information. The raw information is thus first received by the first and second HUD computers and processed by each of said first and second computers so that the outputs of the first and second HUD computers are identical in function of the time. Said outputs serve then as input source of the HUD. Preferentially, the first and second HUD computers process said raw information using identical or different techniques, e.g. by means of identical or diverse algorithms, that are configured for generating said identical outputs even if the processing technique and/or method used for processing the raw information is different for each of the first and second HUD computers. In particular, the first and second HUD computers are connected to the HUD by means of a connection device that periodically and automatically alternates the input source of the HUD between the first and second HUD computer, so that data outputted by the first HUD computer are the input source of the HUD for a time period T_i after which data outputted by the second HUD become the input source of the HUD for a time period T_j, wherein the display time periods T_i and T_j continuously alternate so that data from the first HUD computer and data from the second HUD computer are alternately displayed on the HUD. By this mean and advantageously, any information mismatch between data provided by the first HUD computer and data provided by the second HUD computer might be instantly and directly detected by the vehicle driver, for example as a periodic glitch of displayed graphical information on the HUD.

Further aspects of the present invention will be better understood through the following drawings, wherein like reference numbers designate like objects:
- Figure 1: schematic representation of a HUD system according to the invention.
- Figure 2: schematic representation of a camera based safety module of a HUD system according to the invention.
- Figure 3: schematic representation of a HUD system comprising redundant HUD computers.

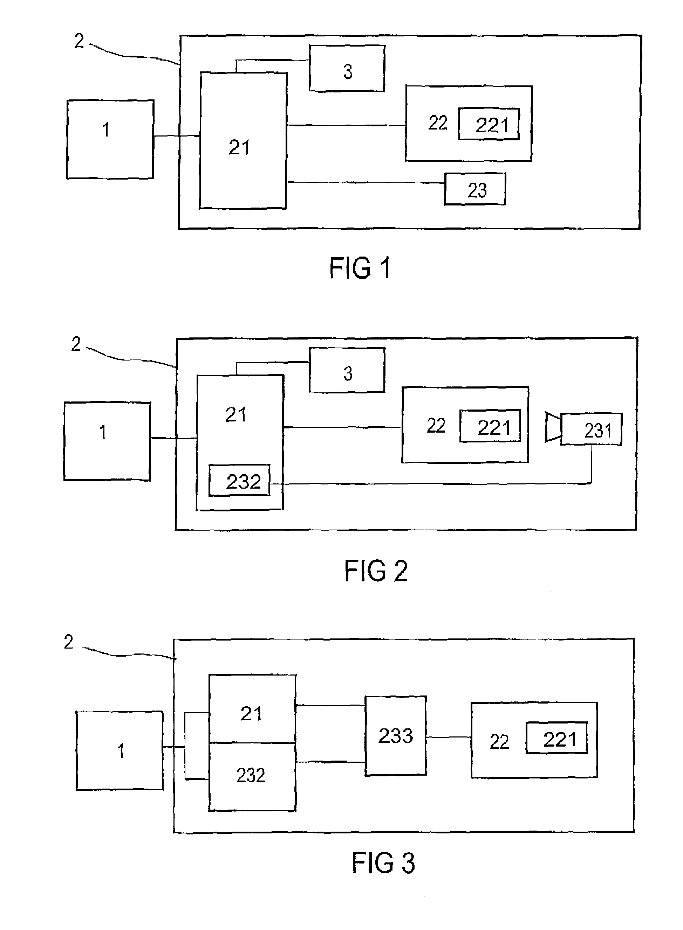

Figures 1 illustrates a preferred embodiment of the present invention. A HUD system 2 is connected to an on-board control unit 1 of a vehicle, e.g. a rail vehicle. The on-board control unit 1 provides a HUD computer 21 of the HUD system 2 with raw data (also called raw information in the present patent application) that have to be displayed on a HUD 221 of a visualization system 22 of the HUD system 2. The HUD 221 comprises for instance a transparent display, e.g. a windshield, for displaying the data processed by the HUD computer 21 without requiring the vehicle driver to look away from its usual viewpoint. The HUD computer 21 is configured for processing the raw data received from the on-board control unit 1. Preferentially, the HUD computer 21 is configured for presenting augmented reality data in the HUD 221, wherein said augmented reality data is for example associated with an object that is in a field of view of a driver of said vehicle, said object being for instance observable by the driver through the HUD 221, e.g. through said windshield. Augmented reality data might be for example stopping points along a track, boundaries between ETCS levels, etc.

The raw data processed by the HUD computer 21, and optionally the augmented reality data, are sent by the HUD computer 21 to the visualization system 22 for their display on the HUD 221. According to the present invention, the HUD system 2 comprises a safety module 23 for checking that the information displayed in the HUD 221 are correct, i.e. correspond to the raw data sent by the on-board control unit. The safety module 23 is in particular configured for providing the driver with a visual and/or audible signal alert that is configured for indicating which displayed data are different from the raw data.

Figures 2 and 3 illustrate two preferred embodiments of the safety module 23 according to the invention.

In Figure 2, the safety module comprises in particular a camera 231 and an image treatment module 232 that might be incorporated to or included into the HUD computer 21. According to this embodiment, the on-board control unit 1 sends raw information to be displayed to the HUD computer 21. The HUD computer 21 is configured for building from the raw data a graphical representation of said raw data, said graphical representation being then displayed on the HUD 221, with optionally an additional layer of augmented reality data. A feedback loop is in particular made up of the camera 231, e.g. a CCD camera, that is configured for capturing the information displayed by the HUD 221, e.g. on a windshield of the HUD 221. The image captured by the camera is then analyzed and reversed from graphical data to interpreted discrete data by the image treatment module 232 or by the HUD computer 21 if the latter comprises the image treatment module 232. The interpreted discrete data are then compared by the image treatment module 232 against the original source of data, i.e. said raw data, delivered by the on-board control unit 1, so that the HUD system 2 is able to determine if the HUD 221 is showing correctly or not the raw data provided by the on-board computer 1. If a failure is detected by the HUD computer 21, then an alarm system 3 might be activated to warn the driver about a display malfunction.

In Figure 3, the safety module comprises in particular a computer that is redundant with the HUD computer 21. In other words, according to this other preferred embodiment, the HUD system 2 comprises redundant HUD computers, respectively a first HUD computer 21 and a second HUD computer 232, both connected to the on-board control unit 1 for receiving and processing simultaneously and in parallel the same raw data. According to this embodiment, the on-board control unit 1 sends said raw information to two redundant computer replicas, i.e. to said first HUD computer 21 and to said second HUD computer 232, that elaborate or build in parallel the graphical representation of said raw data, said graphical representation, comprising optionally the augmented reality data. The graphical representation built by each of the first and second HUD computer is then sent to the visualization system 22 for its display on the HUD 221. In particular, the first HUD computer 21 is configured for using a first technique or method, e.g. a first algorithm, for processing the raw information, and the second HUD computer ^32 is configured for using a second technique or method, e.g. a second algorithm, for processing said raw information and generating an output that is identical in function of the time to the output of the first HUD computer 21. In particular, the first technique or method is identical or different from the second technique or method. Preferentially, the safety module further comprises a connection device 233 connected to each of the outputs of the first and second HUD computers and to the input of the visualisation system 22, wherein said connection device 233 is configured for receiving as input both the graphical representations built or elaborated by each of the first and second HUD computers, and for providing as output alternately either the graphical representation built by the first HUD computer 21, for example during a first time period T_i, or the graphical representation built by the second HUD computer 232, for example during a second time period T_j. According to this preferred embodiment, the visualization system input receives from the connection device 233 and displays on the HUD 221 alternatively the graphical representation built by the first HUD computer 21 and the graphical representation build by the second HUD computer 232, which continuously succeed one another according to the predefined time periods T_i and T_j, with preferentially T_i = T_j = 1 second. In particular, the connection device 233 comprises a multiplexer capable of selecting which of the inputted graphical representations has to be outputted to the visualization system in function of the time, and by taking account of the above-mentioned time period T_i and T_j. Advantageously, the alternation of the graphical representation coming from the first and respectively the second HUD computer on the HUD will only appear as a periodic glitch to the driver if said graphical representations of respectively the first and second HUD computer differ from one another. Any displayed information mismatch between the first and the second HUD computers will advantageously be instantly shown on the HUD to the driver.

In conclusion, the present invention proposes a HUD system 2 ensuring the safety of the information displayed in the HUD for a driver, wherein said displayed information may incorporate augmented reality. The HUD system 2 according to the invention allows a better decision taking for a driver since additional information regarding faulty information is directly observable on the HUD during driving task, improving thus the safety of the vehicle.

## Claims

1. Head-up display (hereafter HUD) system (2) configured for being installed on-board a vehicle, said HUD system (2) comprising:
- a visualization system (22) comprising a HUD (221);
- a HUD computer (21) configured for being connected to the HUD (221) and to an on-board control unit (1) of the vehicle for receiving raw information, wherein said raw information is data sent by the on-board control unit (1) to the HUD computer (21) for its display on the HUD (221);
**characterized in that** the HUD system (2) comprises
- a safety module (23) configured for checking the correctness of the information displayed on the HUD (221) and signaling a difference between the displayed information and the raw information.

2. HUD system (2) according to claim 1, wherein said signaling comprises highlighting on the HUD (221) displayed information that differs from raw information and/or acoustically signaling a difference between the displayed information and the raw information.

3. HUD system (2) according to claim 1 or 2, wherein the safety module (23) comprises a camera (231) configured for capturing an image of the information displayed on the HUD (221).

4. HUD system (2) according to one of the claims 1-3, wherein the HUD computer (21) is configured for reversing graphical data forming the captured image into discrete data, and for analyzing said discrete data in order to detect a difference between the displayed information and the raw information.

5. HUD system (2) according to claim 4, wherein the HUD computer (21) is configured for comparing the raw information against the discrete data for detecting said difference.

6. HUD system (2) according to one of the claims 1 or 2, wherein the safety module (23) comprises an additional computer (232) that is a replica of the HUD computer (21) and redundant with the latter.

7. HUD system (2) according to claim 6, wherein the HUD computer (21) and the additional computer (232) are configured for receiving and processing in parallel the raw information.

8. HUD system (2) according to one of the claims 6 or 7, wherein the HUD computer (21) and the additional computer (232) are configured for using identical or different processing techniques for providing an identical output in function of the time.

9. HUD system (2) according to claim 7 or 8, wherein the HUD computer (21) and the additional computer (232) are connected to the HUD (221) by means of a connection device (233) that is configured for continuously alternating the input source of the HUD (221), wherein the raw data processed by the HUD computer (21) and the same raw data processed by the additional computer (232) succeed one another and are displayed in alternation on the HUD (221).

10. HUD system (2) according to one of the claims 1-9, wherein the HUD computer (21) is capable of incorporating augmented reality data to the raw data for creating a graphical representation with augmented reality to be displayed on the HUD (221) for the driver.

11. Method for checking information displayed on a HUD (221) designed for a vehicle and signaling a displaying failure occurring on said HUD (221), the method comprising
- collecting raw information by means of a HUD computer (21), wherein said raw information is provided by an on-board control unit (1) of the vehicle;
- processing said raw information by means of the HUD computer (21) and displaying it on the HUD (221);
**characterised in that** the method comprises
- checking for a correctness of the information displayed on the HUD (221) by detecting a difference between the displayed information and the raw information;
- signaling any difference between the displayed information and the raw information, so that the driver becomes aware of a failure without having to defocus from his usual viewpoint.

12. Method according to claim 11, wherein said signaling is implemented on said HUD (221) and/or by means of an acoustic signal.

13. Method according to claim 10 or 12, comprising alternating on the HUD (221) the raw information processed by the HUD computer (21) and an additional computer (232) redundant with the HUD computer (21) and configured for working said raw information in parallel with the HUD computer (21).

14. Method according to one of the claim 10 or 12, comprising acquiring an image of the information displayed on the HUD (221), analyzing the acquired image for determining the displayed information, and comparing the displayed information against the raw information for detecting any divergence.
